(19) **Europäisches Patentamt**
**European Patent Office**
**Office européen des brevets**

(11) **EP 4 621 700 A1**

(12) **EUROPEAN PATENT APPLICATION**
published in accordance with Art. 153(4) EPC

(43) Date of publication:
**24.09.2025 Bulletin 2025/39**

(21) Application number: **23892001.1**

(22) Date of filing: **15.11.2023**

(51) International Patent Classification (IPC):
**G06Q 50/40** (2024.01)    **B60L 55/00** (2019.01)
**H02J 3/32** (2006.01)    **B60L 53/66** (2019.01)
**G06F 21/31** (2013.01)    **G06F 21/64** (2013.01)

(52) Cooperative Patent Classification (CPC):
**B60L 53/65; B60L 53/66; B60L 55/00; G06F 21/31;**
**G06F 21/64; G06Q 50/40; H02J 3/32**

(86) International application number:
**PCT/KR2023/018347**

(87) International publication number:
**WO 2024/106935 (23.05.2024 Gazette 2024/21)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.11.2022  KR 20220152651**
**23.11.2022  KR 20220158203**

(71) Applicants:
• **Hyundai Motor Company**
  **Seoul 06797 (KR)**

• **Kia Corporation**
  **Seoul 06797 (KR)**
• **Myongji University Industry and Academia**
  **Cooperation Foundation**
  **Gyeonggi-do 54538 (KR)**

(72) Inventor: **SHIN, Min Ho**
**Yongin-si, Gyeonggi-do 17058 (KR)**

(74) Representative: **Viering, Jentschura & Partner**
**mbB**
**Patent- und Rechtsanwälte**
**Am Brauhaus 8**
**01099 Dresden (DE)**

(54) **POWER TRANSMISSION APPARATUS AND METHOD SUPPORTING MOBILITY NEEDS FUNCTION, AND COMMUNICATION APPARATUS SUPPORTING SAME**

(57)    A power transmission method according to the present disclosure comprises the steps of: receiving, from a user of mobility, a current mobility needs request related to charging of the mobility; transmitting current mobility needs information to the user; receiving, from the user, a new mobility needs configuration request related to the charging of the mobility; and transmitting, to the user, a result message notifying whether or not new mobility needs have been applied to the mobility.

FIG. 7

Description

## TECHNICAL FIELD

The present disclosure relates to a method and apparatus for transferring power to an electric vehicle (EV) or electric mobility and, more particularly, to a method for providing a function allowing a user of the electric vehicle or electric mobility to check a power transfer status and change mobility needs information/configuration, a power transfer apparatus for implementing the method, and a communication apparatus for supporting the method.

## BACKGROUND ART

The description in this section merely provides background information of embodiments of the present disclosure and is not intended to specify prior arts of the present disclosure.

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted in the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted in the electric vehicle may form an inductive resonance coupling with a transmission pad of a ground assembly (GA) installed at a charging station or a charging spot and may charge the battery of the EV using electric power transferred from the ground assembly through the inductive resonance coupling.

An electric vehicle user who wants to charge the EV at a charging station can configure mobility needs information including a target power transfer amount at a start of a charging and can change the mobility needs information/configuration during the charging. The configuration or change of the mobility needs information may be accomplished in the EV, and a communication procedure between the EV and an electric vehicle supply equipment (EVSE) for the setting or change may be found in an industrial standard, ISO 15118-2 or ISO 15188-20.

However, when the EV user who wants to change mobility needs information/configuration is out of the EV for some reason while the charging is in progress or the EV is waiting for the charging, it may be probable that the EV user cannot access the EV because of a distance between the user and the vehicle or some safety regulations. As a result, once the charging is initiated or the charging enters a standby state, the EV user may not be able to change the mobility needs information/configuration. In particular, such a constraint may be more serious in the case of the wireless power transfer.

There is an attempt to allow the EV user to remotely access the EV through an EV manufacturer (OEM) server. However, such a use case is not a normal access route to the EV, involves a complicated procedure, and may bring about a difficulty in billing and obtaining payments from the EV user. Therefore, an alternative method of changing the mobility needs information instead of accessing the EV via the OEM server is needed.

## DISCLOSURE OF INVENTION

### TECHNICAL PROBLEM

To solve the above problem, the present disclosure provides a method of enabling to change mobility needs (MN) information by allowing an access to a power transfer apparatus via a secondary actor involved in a payment for a power transfer or a delivery of power transfer information. In order for a user to acquire and change the mobility needs information or charging status information for a charging session currently in progress or in a standby state from outside of an electric vehicle (EV) or electric mobility, a mutual authentication may be required to be performed in advance between an OEM server of the EV or electric mobility, the power transfer apparatus, and/or the secondary actor.

The present disclosure provides prerequisites for a prior validation required for the user of the EV or electric mobility to acquire and change the mobility needs information or charging status information from outside of the EV or electric mobility or a requirement to ensure an authenticity of information acquired by the user of the EV or electric mobility.

The present disclosure provides a power transfer apparatus, a power transfer method, and a communication apparatus for enabling the user of the EV or electric mobility to acquire and change the mobility needs information or charging status information from outside of the EV or electric mobility.

The present disclosure provides a message type and data format suitable for containing information required to be exchanged between a communication apparatus (i.e., terminal) of the user, a secondary actor, a charging station (CS), and/or the EV or electric mobility during the process.

The present disclosure provides an authentication, authorization, and/or a security securing process performed in advance or through a message exchange to ensure an authenticity of information required to be exchanged between the communication apparatus (i.e., terminal) of the user, the secondary actor, the charging station (CS), and/or the EV or electric mobility.

**TECHNICAL SOLUTION**

According to an aspect of an exemplary embodiment, provided is a power transfer method involved with a process of transferring power to an electric mobility. The power transfer method may include: receiving a request, from a user of the electric mobility, for providing first mobility needs related to charging of the electric mobility; transmitting first mobility needs information to the user; receiving a request for configuring second mobility needs related to charging of the electric mobility from the user; and transmitting a result message informing the user of whether the second mobility needs is applied to the electric mobility.

The power transfer method may further includes: forwarding the request for configuring the second mobility needs to the electric mobility; and receiving a response message, from the electric mobility, informing whether the second mobility needs is applied to the electric mobility in response to the request for configuring second mobility needs.

Before receiving the request for providing first mobility needs, the power transfer method may be based on a status that: the user may be separated from the electric mobility, a charging session for the electric mobility may established and the charging process for the electric mobility may be started or be in a standby state, and an authorization process for the user may be completed.

For receiving the request for configuring the second mobility needs from the user, one or more of a session identifier, a credential, and/or proofs may be received in addition to the second mobility needs. For forwarding the request for configuring the second mobility needs to the electric mobility, the second mobility needs may be forwarded to the electric mobility.

For receiving the request for configuring the second mobility needs from the user, one or more of authentication information and/or authorization information for the user may be received in addition to the second mobility needs in case that the electric mobility is supplied with the power from an electric vehicle supply equipment (EVSE) belonging to an operating entity having no contractual relationship with the user. For forwarding the request for configuring the second mobility needs to the electric mobility, the second mobility needs may be forwarded to the electric mobility.

For receiving the request for configuring the second mobility needs from the user, the request for configuring the second mobility needs received from the user may be entirely trusted based on an assumption that the user is a valid user.

The operation of receiving the request for configuring the second mobility needs from the user may include: validating a relationship between a charging session established for the electric mobility and the request for configuring the second mobility needs.

The operation of receiving the response message from the electric mobility may be performed based on a validation by the electric mobility that the request for configuring the second mobility needs is originated from the user after forwarding the request for configuring the second mobility needs to the electric mobility.

According to another aspect of an exemplary embodiment, provided is a power transfer apparatus associated with a primary assembly supplying power to an electric mobility. The power transfer apparatus may include: a memory storing at least one program instruction and a processor executing the at least one program instruction. The processor may be configured, by executing the at least one program instruction, to: receive a request, from a user of the electric mobility, for providing first mobility needs related to charging of the electric mobility; transmit first mobility needs information to the user; receive a request, from the user, for configuring second mobility needs related to charging of the electric mobility; and transmit a result message informing the user of whether the second mobility needs is applied to the electric mobility.

The processor may be further configured to forward the request for configuring the second mobility needs to the electric mobility; and receive a response message, from the electric mobility, informing whether the second mobility needs is applied to the electric mobility in response to the request for configuring the second mobility needs.

The power transfer apparatus may be based on a status before the processor receives the request for providing the first mobility needs, where the user may be separated from the electric mobility, a charging session for the electric mobility may established and the charging process for the electric mobility may be started or be in a standby state, and an authorization process for the user may completed.

The processor may be further configured to receive one or more of a session identifier, a credential, and/or proofs in addition to the second mobility needs, for receiving the request for configuring the second mobility needs from the user.

The processor may be further configured to forward the second mobility needs excluding the session identifier, the credential, and/or the proofs, for forwarding the second mobility needs to the electric mobility.

The processor may be further configured to receive one or more of authentication information and/or authorization information for the user in addition to the second mobility needs in case that the electric mobility is supplied with the power from an electric vehicle supply equipment (EVSE) belonging to an operating entity having no contractual relationship with the user, The processor may be further configured to forward the second mobility needs excluding the session identifier, the credential, and/or the proofs, for forwarding the second mobility needs to the electric mobility.

The processor may be further configured to trust entirely the request for configuring the second mobility needs received from the user based on an assumption that the user is a valid user.

The processor may be further configured to validate a relationship between a charging session established for the electric mobility and the request for configuring the second mobility needs, based on the reception of the request for configuring the second mobility needs from the user.

The processor may receive the response message from the electric mobility after the request for configuring second mobility needs is delivered to the electric mobility and it is validated by the electric mobility that the request for configuring the second mobility needs is originated from the user.

According to another aspect of an exemplary embodiment, provided is a communication apparatus of a user of an electric mobility. The communication apparatus may include a memory storing at least one program instruction and a processor executing the at least one program instruction. The processor may be configured, by executing the at least one program instruction, to: transmit a request for providing first mobility needs related to charging of the electric mobility to a communication entity comprising one or more of a power transfer apparatus and/or a secondary actor involving in a process of transferring power to the electric mobility; receive first mobility needs information from the communication entity; transmit a request for configuring second mobility needs related to the charging of the electric mobility to the communication entity; and receive a result message informing whether the second mobility needs is applied to the electric mobility from the communication entity.

The communication apparatus may be further configured to be based on a status before transmitting the request for providing the first mobility needs, where the user may be separated from the electric mobility, the charging session for the electric mobility may be established and the charging process for the electric mobility may be started or be in a standby state, and an authorization process for the user is completed.

The processor may be further configured to transmit one or more of a session identifier, a credential, and/or proofs in addition to second mobility needs, for transmitting the request for configuring the second mobility needs to the communication entity.

The processor may be further configured to transmit one or more of authentication information and/or authorization information for the user in addition to second mobility needs in case that the mobility is supplied with the power from the electric vehicle supply equipment (EVSE) belonging to an operating entity having no contractual relationship with the user, for transmitting the request for configuring the second mobility needs to the communication entity.

## ADVANTAGEOUS EFFECTS

According to an exemplary embodiment of the present disclosure, the EV user may change the mobility needs (MN) information by accessing the power transfer apparatus via a secondary actor involved in a payment for a power transfer or a delivery of power transfer information. In order for the EV user to acquire and change the mobility needs information or charging status information for a charging session currently in progress or in a standby state from outside of an electric vehicle (EV) or electric mobility, a mutual authentication may be required to be performed in advance between an OEM server of the EV or electric mobility, the power transfer apparatus, and/or the secondary actor.

An exemplary embodiment of the present disclosure may provide prerequisites for a prior validation required for the user of the EV or electric mobility to acquire and change the mobility needs information or charging status information from outside of the EV or electric mobility or a requirement to ensure an authenticity of information acquired by the user of the EV or electric mobility.

An exemplary embodiment of the present disclosure enables to implement a power transfer apparatus, a power transfer method, and a communication apparatus for enabling the user of the EV or electric mobility to acquire and change the mobility needs information or charging status information from outside of the EV or electric mobility.

An exemplary embodiment of the present disclosure provides a message type and data format suitable for containing information required to be exchanged between the communication apparatus (i.e., terminal) of the user, the secondary actor, the charging station (CS), and/or the EV or electric mobility during the process.

According to an exemplary embodiment of the present disclosure, an authentication, authorization, and/or a security securing process may be performed in advance or through a message exchange to ensure an authenticity of information required to be exchanged between the communication apparatus (i.e., terminal) of the user, the secondary actor, the charging station (CS), and/or the EV or electric mobility.

## DESCRIPTION OF DRAWINGS

FIG. 1 is a block diagram of an electric mobility charging infrastructure according to an exemplary embodiment of the present disclosure;

FIG. 2 illustrates a concept of basic energy requirements and limitations in an electric mobility along with energy request parameters involved in a charging of the electric mobility;

FIG. 3 illustrates a part of mobility needs information, a format and/or meaning of elements designating priorities that may be shared between entities in a power transfer method and/or a power transfer communication method according to exemplary embodiments of the present disclosure;

FIG. 4 is a conceptual diagram illustrating a process in which current mobility needs information is shared among entities in the power transfer method and/or the power transfer communication method according to an exemplary embodiment of the present disclosure;

FIGS. 5 and 6 are conceptual diagrams illustrating a process in which a request for configuring/applying new mobility needs information is shared among entities in the power transfer method and/or the power transfer communication method according to an exemplary embodiment of the present disclosure;

FIG. 7 is a sequence diagram illustrating a protocol for transmitting and receiving current mobility needs and the request for configuring/applying new mobility needs among entities in the power transfer method and/or the power transfer communication method according to an exemplary embodiment of the present disclosure;

FIG. 8 is a conceptual diagram illustrating a process in which the request for configuring/applying new mobility needs information and information for authentication/authorization of the user are shared among entities in the power transfer method and/or the power transfer communication method according to an exemplary embodiment of the present disclosure;

FIG. 9 illustrates an example of parameters that may be shared between the entities in the power transfer method or power transfer communication method according to an exemplary embodiment of the present disclosure; and

FIG. 10 is a block diagram of a detailed configuration of an internal structure of a generalized computing system suitable for implementing the power transfer apparatus, a charging(power transfer) communication apparatus in an electric mobility, any of the secondary actors, and/or a user equipment.

## BEST MODE

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, conventional technologies known to public before the filing of the present disclosure may be utilized in performing a setup, an association, a pairing, a localization, a positioning, and a docking/undocking control before charging an electric vehicle or in transmitting or receiving information required to perform the processes by applying mobile communication technologies such as Wi-Fi or 5G in a single-layer. At least some of the conventional technologies may be applied as a base technology for implementing the present disclosure.

However, the present disclosure is not intended to claim rights to these known technologies, and some of the conventional technologies may be included in the description of exemplary embodiments to enable to those skilled in the art to implement the exemplary embodiments without deviating from a scope of a technical concept of the exemplary embodiments.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted in the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted in the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted in the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"Charging station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (EMAID)": A single contractual certificate issued for each legal contract concluded between the mobility operator and a customer for the electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

The V2G communication interface and the ISO 15118 standard may be intended to enable a user-friendly mechanism for performing an authentication, authorization, and payment at the charging station without requiring a separate user interaction.

An electric vehicle may be integrated into the smart grid to provide a flexible load control and valuable grid services without compromising driver habits. To avoid the need for additional grid components to supply power during a peak demand caused by a variety of load fluctuations, the energy stored in the electric vehicle may be considered as one of energy sources in the smart grid. Furthermore, in order to encourage the long-term expansion of renewable energy sources, providing appropriate incentives to the electric vehicles may also be considered as a means to activate the smart grid.

A vehicle-to-grid transfer protocol (V2GTP) at OSI Layer 5 may be understood as a session wrapper for an application-layer message. The application-layer message may be referred to as a so-called V2G message. The V2GTP protocol may include definitions for a header and a payload to efficiently distinguish and process V2G messages.

"Original Equipment Manufacturer (OEM)": A server operated by a producer who manufactures the EV and may refer to a Root Certification Authority (RootCA) issuing an OEM RootCA Certificate.

"Charging station operator (CSO)": A party responsible for the provisioning and operation of a charging infrastructure and managing electricity to provide a requested energy transfer service. The charging station operator may be a term having a same concept as a charge point operator (CPO).

"Charge Service Provider (CSP)": An entity managing and authenticating EV user's credentials and providing the billing and other value-added services to customers. The CSP may be considered as a special type of the mobility operator (MO) and may be integrated with the MO.

"Clearing House (CH)": An entity handling cooperation between the MOs, CSPs, and CSOs. In particular, the clearing house may perform a role of an intermediate actor facilitating authorization, billing, and settling procedure for the EV charging service roaming, between two clearing parties.

"Roaming": Information changes and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

"V2G charging loop" or "V2G charging loop": A messaging process according to an ISO 15118 standard to control a charging process.

"Renegotiation": A messaging process between the EV and the EVSE during a V2G communication session to renew a charging schedule by retransmitting parameters to each other.

"Multiplexed communications": Communications between the EV and the EVSE through a V2GTP connection to transfer multiple messages having different types of payloads.

"V2G transfer protocol (V2GTP)": A communication protocol to transfer V2G messages between two V2GTP entities.

"V2GTP entity": A V2G entity supporting the V2G transport protocol.

"Vendor specific element (VSE)" may refer to a data format that contains information on a type of an EVSE available at a current location in ISO 15118-based communications.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

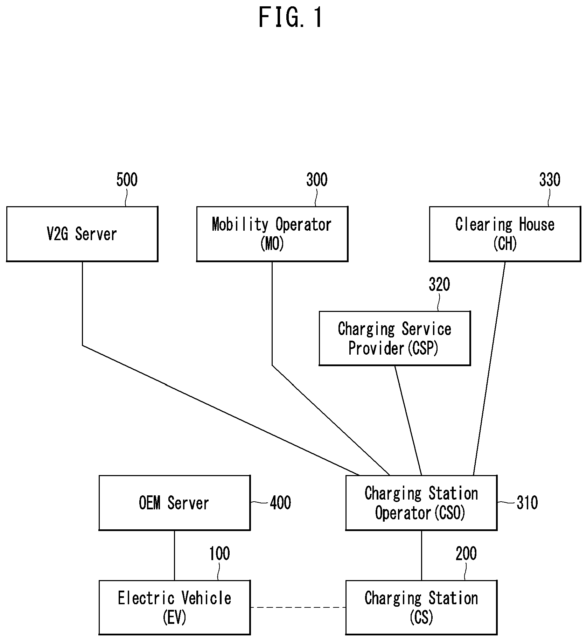

Hereinbelow, exemplary embodiments of the present disclosure are described in detail with reference to FIGS. 1-10.

FIG. 1 is a block diagram of an electric mobility charging infrastructure according to an exemplary embodiment of the present disclosure.

The electric vehicle (EV) or electric mobility charging infrastructure, which provides a charging service to an EV 100, may include a charging station (CS) 200, a mobility operator (MO) server 300, a charging station operator (CSO) server 310, a charge service provider (CSP) server 320, a clearing house (CH) server 330, an original equipment manufacturer (OEM) server 400, and a vehicle-to-grid (V2G) server 500.

Although an EV 100 is illustrated in the exemplary embodiment of FIG. 1, another electric mobility of various types may replace the role of the EV 100 in an alternative embodiment of the present disclosure.

The EV charging infrastructure shown in the drawing constitutes a vehicle-grid integration (VGI) system that supplies electrical energy from the power grid to the EV 100 so as to enable the EV 100 to charge a battery therein as well as provides the electrical energy stored in the battery of the EV 100 to a building electrically connected to the power grid or a specific device. An EV user may designate or change, in the EV 100, a target power transfer amount to be charged or discharged from or to the charging station 200. According to the present disclosure, the EV user may change the target power transfer amount while being out of the EV 100, i.e., outside the EV 100, by accessing the charging station 200 through other entities 300-350. During a process of changing the target power transfer amount, the EV 100 and the charging station 200 act as primary actors, and the MO server 300, CSO server 310, CSP server 320, CH server 330, the OEM server 340, and the V2G server 350 act as secondary actors.

The EV 100, which refers to a general electric vehicle including a plug-in hybrid electric vehicle (PHEV), may be charged at the charging station 200 by a conductive charging or a wireless power transfer. The charging station (CS) 200 actually performs the charging for the EV 100. The charging station 200 has one or more EV supply equipment (EVSE), and each EVSE may include at least one conductive charger and/or a wireless charging spot. The charging station 200 may be a dedicated commercial charging facility. The charging station 200 may be located in various places such as a parking lot attached to an EV owner's house or a parking area of a shopping center, an office building, and or a group residential town, for example. The charging station 200 may also be referred to as a 'charging point', an 'EV charging station', an 'electric charging point', or an 'electronic charging station (ECS)'.

The mobility operator (MO) server 300 is a service provider with which the EV owner has a contract for services related to the EV operation such as the charging, authorization, and billing to enable the EV driver may charge the EV in the charging station 200. In order for the EV 100 to receive the charging service from a charging station, the charging station has to belong to the MO or the charging infrastructure has to support a roaming scenario. The MO 300 may be operated by an electricity supplier or an electricity wholesaler, but the present disclosure is not limited thereto. The MO may perform substantially the same role as an 'E-mobility service provider (EMSP)' described below.

The charging station operator (CSO) server 310 or a charge point operator (CPO) operates the charging station and manages the electricity to provide a requested energy transfer service. The CSO 310 may be operated by a charging station manufacturer or the electricity supplier, for example.

The charge service provider (CSP) 320 manages and authenticates credentials of the EV user and provides the billing and other value-added services to customers. The CSP 320 may be considered as a particular type of the MO 300 and may be implemented with the MO 300. There may exist a plurality of CSPs 320. In such a case, each CSP 320 may be associated with one or more CSOs 310 so that the CSP 320 and the one or more CSOs 310 constitute a charging network. The EV 100 may receive an automatic charging service according to a plug-and-charge or park- and-charge (PnC) scheme in a network of the CSO 310 associated with the CSP 320 that is associated again with the MO 300 having a contractual relationship with the EV 100. However, a roaming may be required when the EV 100 is to be charged at a charging station of another CSO 310 which is not associated with the CSP 320 that is associated again with the MO 300 having the contractual relationship with the EV 100. Each CSP 320 may exchange information with another CSP or CSO 310 belonging to another charging network and may also exchange information with the clearing house 330 to enable the roaming.

The clearing house (CH) server 330 handles the cooperation between the MOs 300 and the CSPs 320. In particular, the CH 330 may perform a role of an intermediate actor facilitating the authorization, billing, and settling procedure for the EV charging service roaming between two clearing parties. When the EV driver wishes to charge the EV at a charging station that does not belong to the charging network of the MO 300 having the contractual relationship with the EV, the CH 330 may be connected to the CSO 310 or the CSP 320 to facilitate the roaming. In a situation that the roaming is required, the CH 330 enables the CSO 310 or CSP 320 to contract with the MO 300 and turn over authorization data and charging detail records (CDR) to the MO 300. The CH 330 may also be referred to as a 'contract clearing house (CCH)', 'mobility clearing house (MCH)', 'roaming platform', or 'e-mobility clearing house (E-MOCH)'.

The vehicle-to-grid server (hereinafter, referred to as 'V2G') 350 allows verifications of identities of the actors in the VGI system and manages all settings and system configuration related to a forward power transfer from the grid to the EV and a reverse power transfer from the EV to the grid. In addition, considering that a power demand and a power factor may fluctuate by time within the grid, the V2G 350 may perform operations for a demand response (DR), i.e., a peak reduction and may perform a frequency regulation (FR) operation to prevent a serious distortion of the power factor. In terms of the DR and the FR, the V2G 350 may adjust supplies of the electrical energy from various power sources including power generation companies, renewable energy sources, and the EVs 100 moment by moment, and may monitor a power supply to each customer.

Though the 'mobility operator (MO)', the 'charging service operator (CSO)', the 'clearing house (CCH)', and the 'V2G' may seem to refer to persons or organizations, these terms used herein including the claims may be implemented in hardware, software, and/or a combination thereof and are just named functionally in short to increase a readability. In an exemplary embodiment, these components may be a server device implemented by a combination of hardware and software and allowing an access of other devices through a network such as Internet. Since these components are functionally divided, two or more of them may be stored and executed in a single physical device or may be integrated into a single program. In particular, a single entity may serve as both the CSO and the CSP, and another single entity may serve as both of a certificate provisioning service (CPS) and a contract certificate pool (CCP). Meanwhile, one or more of the components may be rearranged to have a different appearance and name.

On the other hand, the EV charging service and the related infrastructure are in a field where various industrial fields such as automobiles, power grid, energy, transportation, communications, finance, and electronic products converges, and standardizations therefor have been carried out in parallel in various viewpoints and by various subjects including multiple international standardization organizations and local standardization organizations in individual countries, and thus there exist many terms containing similar concepts. In particular, the charging station operator (CSO) and the charge point operator (CPO) may have in common in roles and functions and may refer to substantially the same entity as each other although there may be some functional differences and nuances. In addition, the charging service provider (CSP) may have at least partially in common with the mobility operator (MO) in terms of their roles and functions, and these terms may be used interchangeably. Such circumstances are to be taken into account while interpreting the present specification including the claims.

In the EV charging infrastructure shown in FIG. 1, a public key infrastructure (PKI) is used as a basis for operating the PnC. The PKI provides a framework for verifying identities of a person and a device, activating confidential communications, and ensuring controlled access to resources. An example of a PKI-based certificate hierarchy is specified in the ISO 15118-20 standard.

In the EV charging infrastructure shown in FIG. 1, the EV user who is out of the EV 100, i.e., outside the EV 100, may access the MO 300 to check a charging state of the EV 100 of the user which is being charged or in a charging standby state or to request a change of the target power transfer amount. The MO 300 may access the EVSE of the charging station 200 in response to a request of the EV user and request to provide information on the charging state of the EV 100 or change the target power transfer amount. The MO 300 may perform a billing or a tariff settlement operation as needed after the change of the target power transfer amount.

Alternatively, the system may be configured such that the EV user may request the change of the target power transfer amount through another secondary actor (SA) such as the CSO 310, CSP 320, CH 330, or V2G server 350 rather than the MO 300. The secondary actor having received a request for the change may access the EVSE directly or through another secondary actor such as the MO 300 to request again the service requested by the EV user. A path through which the request of the EV user is transferred to the EVSE may be modified otherwise, and the present disclosure is not limited to a particular path that a certain secondary actor is involved with. Meanwhile, the EV user may directly input the request for the change of the target power transfer amount in the EVSE 210.

The change of the target power transfer amount may be carried out to maximize an incentive provided by the V2G 350 in terms of the DR and the FR, or may be done to adjust a target charging level for an economic reason or other reasons, or may be done due to other reasons.

The method of changing the target power transfer amount according to the present disclosure may be particularly useful in a system that charges the EV 100 by a wireless power transfer (WPT). However, the method for changing the target power transfer amount according to the present disclosure is not limited to the wireless power transfer (WPT) system but may be used in a system for charging the EV 100 by a conductive charging. The energy transfer modes that the EVSE 210 charges the EV 100 includes an alternating current (AC) mode, a direct current (DC) mode, and a WPT mode. A possibility of a bidirectional power transfer (BPT) and a use of an automated connection device (ACD) may yield 12 combinations of: AC, DC, WPT, AC_ACD, DC_ACD, WPT_ACD, AC_BPT, DC_BPT, WPT_BPT, AC_ACD_BPT, DC_ACD_BPT, and WPT_ACD_BPT. The method of changing the target power transfer amount according to the present disclosure is applicable to all or some of all the energy transfer modes.

The power transfer system may include an EVSE 210 installed at a power transfer point such as the charging station. In addition, the power transfer system may include an electric vehicle communication controller (EVCC) installed in in the EV 100.

The EVSE 210 may include a supply equipment communication controller (SECC).

The SECC, which is a high-level controller, may communicate with an EV communication controller (EVCC) in the EV 100 through power line communications (PLC) or a wireless LAN (WLAN). The SECC and the EVCC may communicate with each other in an application layer, i.e., in an OSI layer 3 and higher layers according to an ISO 15118-20 standard, for example. A physical layer and a data link layer between the SECC and the EVCC may be configured to conform to the ISO 15118-8 standard, for example. In addition, the SECC may control the supply-side power circuit. Further, according to the present disclosure, the SECC may receive a request to change the target power transfer amount from the EV user through a secondary actor such as the MO 300 over the Internet and communicate with the EVCC to enable the change of the target power transfer amount.

The supply-side power circuit may supply the power from the power grid to the EV 100 or supply the power discharged by the EV 100 to the power grid. The supply-side power circuit may include a supply-side power electronic circuit, an electric power meter, and an ammeter. The supply-side power circuit may include one or more of a converter adjusting a level of a voltage and/or a current and a rectifier converting an AC current into a DC current.

The EV 100 may include an EVCC, an EV-side power circuit, and a human machine interface (HMI).

The EVCC, which is a high-level controller, may communicate with the SECC in the EVSE 210 through the power line communications (PLC) or the wireless LAN (WLAN). The EV-side power circuit may charge the battery used for a propulsion of the EV 100 by the power received from the EVSE 210, or may supply the energy stored in the battery 199 to the power grid through the EVSE 210. The EV-side power circuit in the EV-side power circuit may include one or more of a converter adjusting a level of a voltage and/or a current and a rectifier converting the AC current into the DC current.

The HMI allows the EV user to check the state information of the EV 100 and input information necessary for operating the EV 100. In particular, according to the present disclosure, the HMI may enable the EV user to set or change the target power transfer amount and may provide a menu for checking a state of charge (SoC) of the battery.

In the charging station 200, the SECC may be installed externally to the EVSE 210 as well, and one SECC 220 may be configured to control one or a plurality of, for example, four EVSE 210.

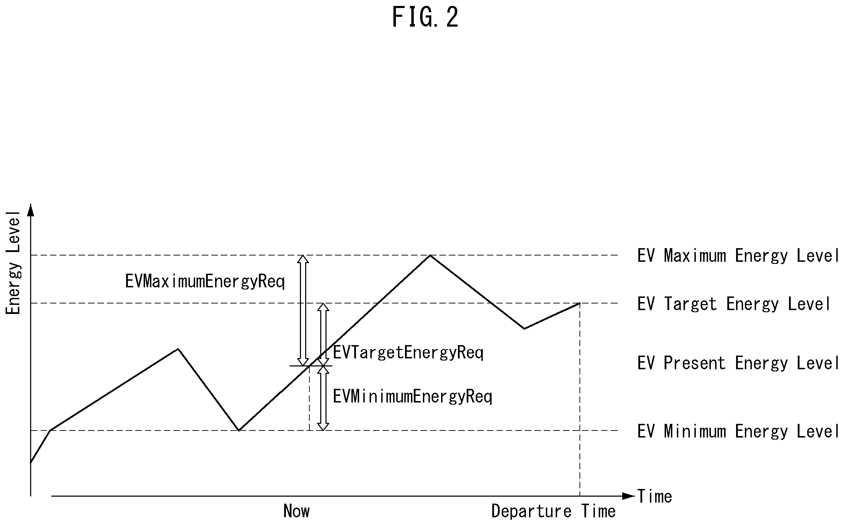

FIG. 2 illustrates a concept of basic energy requirements and limitations in the electric mobility along with energy request parameters involved in a charging of the electric mobility.

The energy request parameters may be referred to as mobility needs (MN) in this specification.

The mobility needs include a departure time. The departure time means a time when the mobility leaves the charging spot. That is, the user may request to charge the electric mobility such that the state of charge (SoC) of the mobility reaches a target energy level before the departure time in a state that the mobility is placed at the charging spot. In addition, the user may request the SoC of the mobility to reach and maintain a minimum energy level or higher before the departure time.

The EVCC may acquire an EV current energy level (i.e., EV Present SoC) and share the data with the SECC, the EVSE 210, or the CS 200 if necessary.

The mobility may be set with an EV maximum energy level (i.e., EV Maximum SoC). Information such as the EV maximum energy level may be shared with other entities by the EVCC or the OEM server 400.

An EV target energy level (i.e., EV Target SoC) may be set to be equal to the EV maximum energy level or an arbitrary level below the EV maximum energy level.

The end of a charging session between the mobility and the EVSE 210 may be defined in the form of the 'departure time', may be defined by a 'charging target' indicating an energy stored in the battery at the time of the end of the charging, or may be defined in the form of a 'minimum charge' after the beginning of the charging session.

The 'charging target' or the 'minimum charging amount' may be expressed by a driving distance, an amount of power in Watt-hour units, or the state of charge (SoC). Although the driving distance is the most useful concept, it is difficult to convert the distance into an energy unit. The Watt-hour unit may be the most sophisticated expression, it is difficult for the EV user to understand intuitively. The state of charge (SoC) may be the most intuitive and relatively accurate, and thus may be an expression suitable for indicating the battery energy level after the charging. In the following description, each energy level value is used to have a meaning of the SoC unless specified otherwise.

Referring to FIG. 2, the EVCC may send to the SECC 210 one of an EV minimum energy request (EVMinimumEnergyReq), an EV maximum energy request (EVMaximumEnergyReq), and an EV target energy request (EVTargetEnergyReq) as a charging parameter.

The EV minimum energy request (EVMinimumEnergyRequest) indicates a minimum amount of energy requested by the EV at any given time during an energy transfer loop and may be calculated as a difference between a minimum level of energy requested by the EV as soon as possible and a current level of energy of the EV battery as shown in Equation 1. When the EVMinimumEnergyRequest is positive, an immediate charging is required for the EV. When the EVMinimumEnergyRequest value is equal to zero or negative, the charging may be postponed or a discharging may be available.

[Equation 1]

$$EVMinimumEnergyRequest = EV\ Minimum\ Energy - EV\ Present\ Energy$$

The EV maximum energy request (EVMaximumEnergyRequest) indicates a maximum amount of energy requested by the EV at any given time during the energy transfer loop and may be calculated as a difference between a maximum level of energy accepted by the EV and the current level of energy of the EV battery as shown in Equation 2.

[Equation 2]

$$EVMaximumEnergyRequest = EV\ Maximum\ Energy - EV\ Present\ Energy$$

The EV target energy request (EVTargetEnergyRequest) indicates an amount of energy that the EV requests to charge before the departure time of the EV and may be calculated as a difference between a level of energy requested by the EV at the departure time and the current level of energy in the EV battery as shown in Equation 3.

[Equation 3]

$$EVTargetEnergyRequest = EV\ Target\ Energy - EV\ Present\ Energy$$

On the other hand, the charging schedule refers to a profile plan of the charging current according to time. The establishment of the charging schedule may be performed in any one of two modes: a scheduled control mode and a dynamic control mode. In the scheduled control mode, the EVCC and the SECC negotiates and determines the power profile that meets mobility needs of the EV user. The power profile may be determined based on the target energy level, power information, and tariff information. In the scheduled control mode, the EV is responsible for meeting charging requirements of the EV user. In the dynamic control mode, the SECC or a secondary actor such as the V2G 500 controls a flow of power to meet the charging requirements of the EV user and other constraints without any negotiation between the EVCC and the SECC. For example, the V2G 500 may present the charging requirements or constraints so that each EV may be charged at night when the power demand is lowest. In this case, the SECC may control the power flow according to constraints set by the secondary actor and may provide the EVCC with any set point to be abided.

When the EV user set the target power transfer amount, that is, the target energy request, the EV user may set whether to allow the change of the target power transfer amount through the EVSE 210 while the user is out of the EV 100. As mentioned above, the request to change the target through the EVSE 210 includes not only a direct input of the request to the EVSE 210 but also a request of the change through a secondary actor such as the MO 300 so that the secondary actor forwards the request to the EVSE 210.

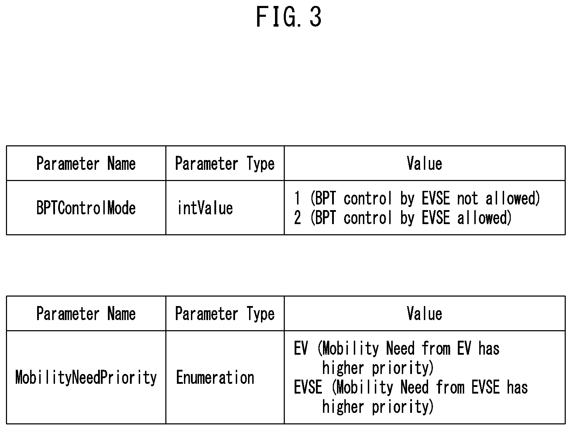

FIG. 3 illustrates a part of mobility needs information, a format and/or meaning of elements designating priorities that may be shared between entities in a power transfer method and/or a power transfer communication method according to exemplary embodiments of the present disclosure.

In case that the EV user determines to allow the target change through the EVSE, a parameter indicating the allowance may be set and used. For example, according to an exemplary embodiment, a bidirectional power transfer control mode (BPTControlMode) parameter having an integer or logical type element, as summarized in FIG. 3, may be used. For example, the BPTControlMode parameter may be an integer parameter type element, and may have a value of '1' (i.e., BPTControlMode='1') to indicate that the target change request through the EVSE is not allowed. Meanwhile, the BPTControlMode parameter may have a value of '2' (i.e., the BPTControlMode parameter='2') to indicate that the target change request through the EVSE is allowed. In such a case, the request to change the target power transfer amount directly input to the EVSE or received through the secondary actor may be forwarded by the EVSE to the EV 100, and may be processed with a priority over the change request input by the user in the EV 100.

The BPTControlMode parameter may be set in the EV 100 by the EV user. When the user selects a menu for setting the BPTControlMode parameter through the HMI of the EV 100, a setting screen is displayed on the display of the EV 100 to allow the user to select one of the options for the BPTControlMode parameter. When the user selects an option for the BPTControlMode parameter, the selected parameter value is stored in the EV 100. The stored parameter may be forwarded to the SECC via a message such as the ChargeParameterDiscoveryRes() message, for example.

Whether or not to allow the "request to change the target through the EVSE 210' may be indicated in another style. The format and meaning of the element designating the priority may be defined alternatively as shown in FIG. 3. According to the present embodiment, the EV user may select one item in an enumerated list including the EV and the EVSE to give priorities to the items. When the user selects the EV 100 or the EVSE from the enumerated list, the selected element or a mobility needs priority (MobilityNeedPriority) value determined according to the selection may store in the EV 100 and may be used for the process of changing the target power transfer amount.

When the MobilityNeedPriority element has a value of 'EV' (i.e., MobilityNeedPriority='EV'), a higher priority is given to the change request input to the EV than the change request received through the EVSE. In this case, the EVSE ignores the request to change the target power transfer amount that is directly input to the EVSE or received through the secondary actor without providing it to the EV 100, or the EV 100 ignores the request after the request is forwarded to the EV by the EVSE. Meanwhile, When the MobilityNeedPriority element has a value of 'EVSE' (i.e., MobilityNeedPriority='EVSE'), the higher priority is given to the change request received through the EVSE than the change request input in the EV 100. In this case, the request to change the target power transfer amount directly input to the EVSE or received through the secondary actor may be forwarded to the EV 100 by the EVSE to be processed prior to the change request input by the user in the EV 100.

The communications between the EVCC and the SECC may be accomplished through the exchange of predetermined messages, and each message may include a SessionID facilitating the management of the communication session and one or more parameters. For example, a V2G communication session always starts with a SessionSetupReq/Res message pair and always ends with a SessionStopReq/Res message pair. On the other hand, when the EV 100 does not needs a power transfer but is required to maintain the V2G communications, the EV may enter a 'standby' state instead of a 'pause' state. The standby state may start with a PowerDeliveryReq message having a ChargeProgress parameter value of 'Standby' and end with a PowerDeliveryReq message having ChargeProgress parameter of 'Start' or 'Stop'. During the standby state, an EVOperation parameter in a charging loop message pair is set to 'Standby. After an authorization of the charging by the EVSE, the EVCC and the SECC may negotiate the charging parameters with the charging parameter discovery request/response (ChargeParameterDiscoveryReq/Res) message pair.

In particular, a ChargeParameterDiscoveryReq message may be used by the EVCC to provide the charging parameters to the SECC. By sending the ChargeParameterDiscoveryReq message, the EVCC may provide the status information about the EV 100 along with a departure time (DepartureTime) indicating the termination time and additional parameters. The ChargeParameterDiscoveryRes message may be used by the SECC to provide the EVCC with applicable charging parameters from a perspective of the grid. Next to the general charging parameters of EVSE, this message may optionally include additional information on cost over time, cost over demand, cost over consumption, or a combination thereof. The EV 100 may optimize the charging schedule for the requested amount of energy based on the cost information.

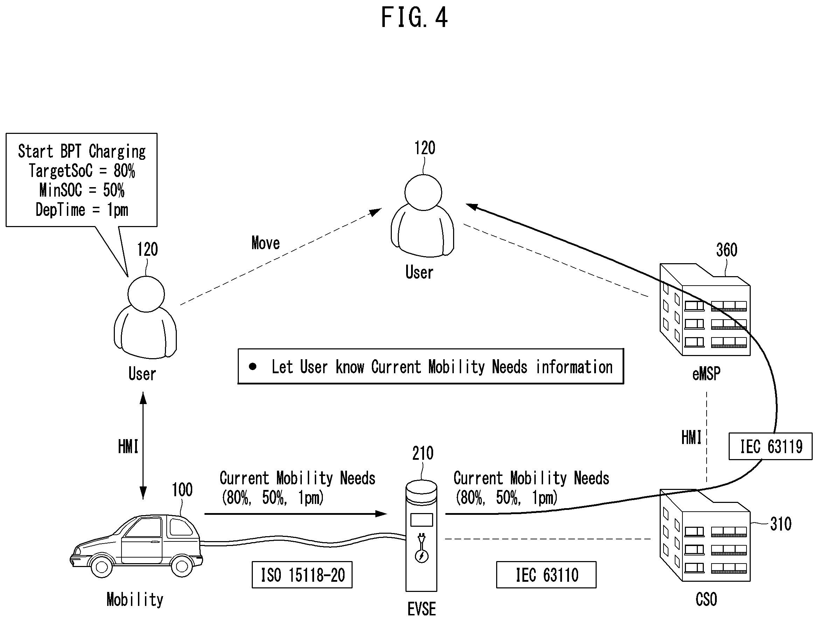

FIG. 4 is a conceptual diagram illustrating a process in which current mobility needs information is shared among entities in the power transfer method and/or the power transfer communication method according to an exemplary embodiment of the present disclosure.

In the following disclosure including the description of embodiments shown in FIGS. 4-10, a power transfer apparatus may be a concept referring to the charging station (CS), the electric vehicle supply equipment (EVSE), or the supply equipment communication controller (SECC).

A charging communication apparatus in the electric mobility may be a concept referring to the electric vehicle communication controller (EVCC).

The secondary actor (SA) may be a concept referring to an eMobility service provider (eMSP), the mobility operator or marketplace operator (MO), the charging service provider (CSP), or a flexibility operator (FO).

In some embodiments of the present disclosure, the charging station operator (CSO), a charging station management system (CSMS), or the charging point operator (CPO) may be understood as the power transfer apparatus or one of the secondary actors. In other words, depending on their roles, the CSO, the CSMS, or the CPO may serve as the power transfer apparatus or may be included in the secondary actors.

A home E-mobility Service Provider (hEMSP) or a home charging service provider (hCSP) may be an entity having a contract with the EV user and may authorize an energy transfer session for a mobility to another CSP or CSO.

A visited charging station operator (vCSO) may refer to a CSO that is related to a CS or EVSE currently visited by the current mobility and capable of transferring energy to the current mobility but does not belong to the home charging service provider.

A communication apparatus may be understood as one or more of the SECC, and/or a user communication terminal located remotely from the mobility depending on its function.

In the embodiments of FIGS. 4-10, a user 120 located remotely from the mobility 100 may be provided with a function to change charging constraints by using a backend network.

In some embodiments where the mobility 100 supports the bidirectional power transfer (BPT) function, the user may also change parameters related to the BPT function.

In the embodiments of FIGS. 4-10, if a request for providing current mobility needs information (first mobility needs information) or a request for configuring/applying new mobility needs (second mobility needs) from the user 120 is received by the mobility 100 via the EVSE 210, the CS 200, or the SECC, the request may be recognized as a wake-up request for the mobility 100.

The mobility needs and/or the mobility needs information may include the departure time (DepartureTime), the target state of charge (SoC), and the minimum SoC.

Exemplary embodiments of the present disclosure are intended to allow the EVSE 210 to propose new mobility needs to the mobility 100.

In this case, the new mobility needs may be originated from a remote EV user 120.

The mobility 100 may accept or refuse the new mobility needs.

A proposal and acceptance of the new mobility needs may be based on an assumption of the dynamic control mode.

In order for the proposal of the new mobility needs proposal to be applied to the mobility 100, the current mobility needs information of the mobility 100 may be required to be presented to the EV user 120 or another entity.

The EVSE 210, the CS 200, or the SECC may directly deliver the new mobility needs proposal to the mobility 100.

Though the EVSE 210 receives the current mobility needs (first mobility needs) from the mobility 100 and shares the information of the current mobility needs with another entities in the embodiment of FIG. 4, the EVSE 210, the CS 200, or the SECC may receive the current mobility needs information from the mobility 100 in another embodiments of the present disclosure.

The current mobility needs information may be delivered to the eMSP 360 via the CSO 310, and the current mobility needs information delivered to the eMSP 360 may be delivered to the user 120 from the eMSP 360.

The role of the CSO 310 depicted in FIG. 4 may be performed by the CSMS or the CPO.

The role of the eMSP 360 depicted in FIG. 4 may be performed by the MO, the CSP, or the FO.

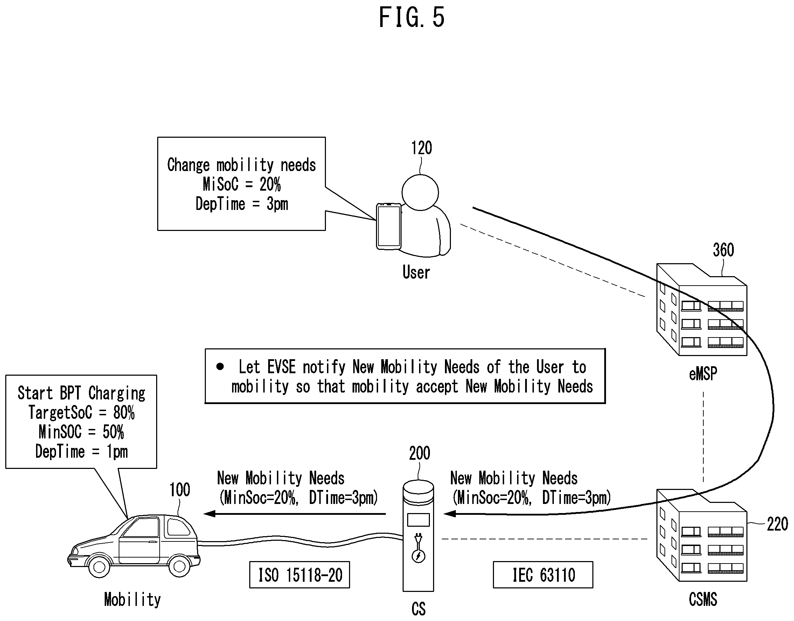

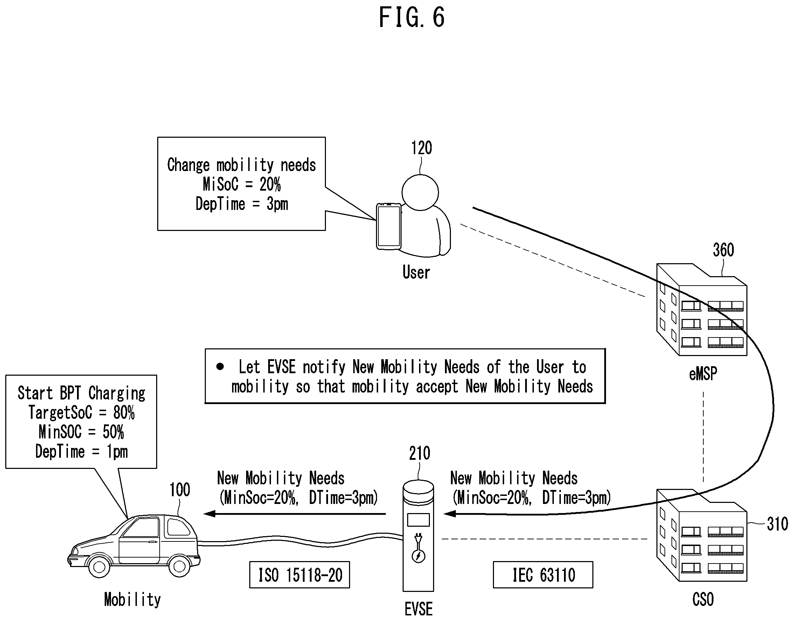

FIGS. 5 and 6 are conceptual diagrams illustrating a process in which a request for configuring/applying new mobility needs information is shared among entities in the power transfer method and/or the power transfer communication method according to an exemplary embodiment of the present disclosure.

Referring to FIGS. 5 and 6, the new mobility needs information configured by the user 120 may be delivered or notified to the mobility 100 via at least one of the secondary actors and/or the power transfer apparatus, so that the mobility 100 may accept the new mobility needs.

In this case, the power transfer apparatus may refer to the CS 200 or the EVSE 210. Additionally, the SECC which is an entity involved in controls and communications for the power transfer process, may deliver the request for providing current mobility needs or the request for configuring/applying new mobility needs to the mobility 100.

In the embodiment shown in FIGS. 4-6, the departure time is delayed by 2 hours (i.e., the charging session is extended for 2 hours) and the minimum SOC is reduced to 20 percent according to the new mobility needs compared with the current mobility needs.

The secondary actor may refer to at least one of the eMSP 360, the MO, the CSP, or the FO. According to an exemplary embodiment, one or more of the CSO 310, the CSMS 220, and the CPO may be included in the secondary actors.

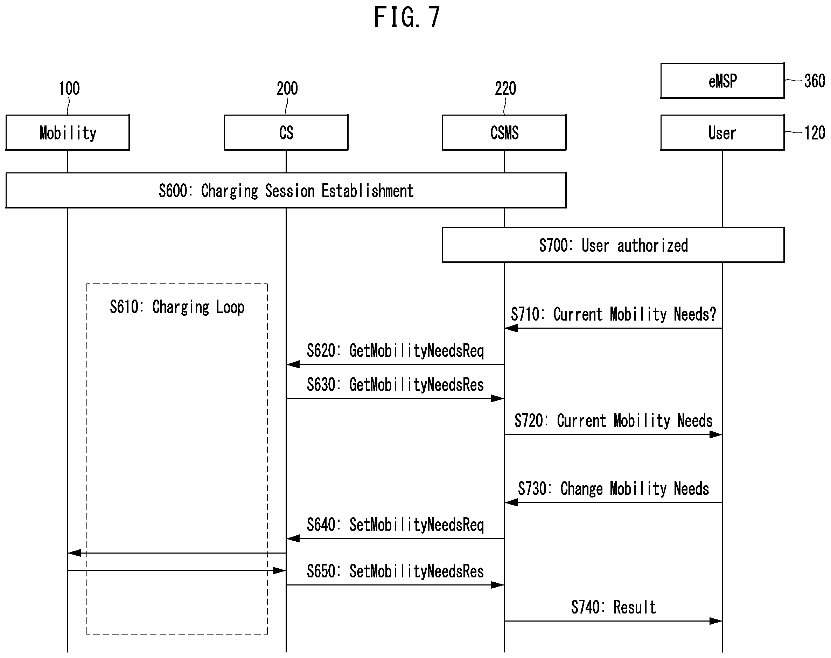

FIG. 7 is a sequence diagram illustrating a protocol for transmitting and receiving the current mobility needs and the request for configuring/applying new mobility needs among entities in the power transfer method and/or the power transfer communication method according to an exemplary embodiment of the present disclosure.

The power transfer method for involving in a process of transferring power to the electric mobility 100 according to an exemplary embodiment of the present disclosure may include an operation S710 of receiving a request, from the user 120 of the mobility 100, for providing current mobility needs related to the charging of the mobility 100; an operation S720 of transmitting current mobility needs information to the user 120; an operation S730 of receiving a request for configuring/applying new mobility needs related to the charging of the mobility 100 from the user 120; and an operation S740 of transmitting a result message informing the user 120 of whether the new mobility needs information/configuration is applied to the mobility 100.

The power transfer method may further include an operation of forwarding the request for configuring/applying new mobility needs and/or information included in the request to the mobility 100, and an operation of receiving a response message, from the mobility 100, informing whether new mobility needs configuration is applied to the mobility 100 in response to the request for configuring/applying new mobility needs.

Before the operation 710 of receiving the request for providing current mobility needs, the user 120 may be separated from the mobility 100, a charging session for the mobility 100 may be established (S600) and the charging process (S610) for the mobility 100 may be started or may be in a standby state, and an authorization process (S700) for the user 120 may be completed.

The request for providing current mobility needs of the user 120 may be transmitted to the power transfer apparatus via at least one of the secondary actors (S620).

The current mobility needs or the current mobility needs information may be provided to the user 120 via the at least one of the secondary actors (S630).

The power transfer apparatus may be at least one of the charging station 200 or the EVSE 210. Alternatively, the SECC may be a device performing the communications and controls of the power transfer process and may be involved in the operations S620 and S630.

In an exemplary embodiment of the present disclosure, the current mobility needs information provided to relevant entities may be originated from the mobility 100. Alternatively, however, the power transfer apparatus may provide the current mobility needs information acquired in advance in response to the requests transmitted in the operations S710 and S620 (S630 and S720).

The secondary actor is not limited to the example shown in FIG. 7 and may refer to at least one of the eMSP 360, the MO, the CSP, and/or the FO. In another exemplary embodiment of the present disclosure, at least one of the CSO 310, the CSMS 220, and/or the CPO may be included in the secondary actors.

The power transfer apparatus may receive a request for configuring/applying new mobility needs from the user 120 via at least one secondary actor (S730, S640).

The power transfer apparatus may receive information on acceptance or rejection of the request for configuring/applying new mobility needs and information on whether the new mobility needs information/configuration is applied from the mobility 100 as a result message, and may forward the result information in the result message to the user 120 via the secondary actor (S650, S740).

If the charging service is in an activated state, the CS 200 may report the charging service activation state to the CSMS 220.

At this time, the CS 200 may transmit a following message to the CSMS 220.

MobilityNeedsModeReq { "Session ID": "1234", "MobilityNeedsMode": 2 }

The CS 200 may update the mode when necessary. For example, the mode may be updated by reflecting a result of a service renegotiation according to ISO 15118-20 standard and so on.

The CSMS 220 may inquire the CS 200 about a mobility needs mode.

The CSMS 220 may inquire CS 200 about the current mobility needs (S620).

At this time, the CSMS 220 may transmit a following message to the CS 200.

Message (session ID, DepTime, TargetSOC, MinSOC)
MobilityNeedsMoniterReq {

    "Session ID": "1234", "DepartureTime": 3600,
    "TargetSOC": 80, "MinSOC": 50}

In some exemplary embodiments of the present disclosure, the CS 200 may repeatedly report the mobility needs to the CSMS 220 in the form of a push message.

The CSMS 220 may transmit the request for configuring/applying new mobility needs to the CS 200 (S640).

At this time, the message may have a format including a session ID, [DepTime], [TargetSOC], and/or [MinSOC].

MobilityNeedsNewReq {

    "Session ID": "1234", "DepartureTime": 7200,
    "MinSOC": 20, "AckMaxDely": 60, }

The CS 200 may transmit the result message to CSMS 220 in response to the request for configuring/applying new mobility needs (S650).

MobilityNeedsNewRes { "Result": "Accepted" | "Rejected" }

The CSMS 220 may request the current mobility needs information from the CS 200 (S620).

The message pattern in a GetMobilityNeeds use case may be a request, response, and/or message pair of a request and a response.

The message format in the operation S620 may have a following format, for example.

GetMobilityNeedsReq { <sessionID> }

At this time, <sessionID> may enable to uniquely identify the charging session. Key and value definitions may be additionally defined.

Upon receiving the message, the CS 200 may feedback the information most recently received from the mobility 100 to the CSMS 220 (S630).

The message format in the operation S630 S620 may have a following format, for example.

GetMobilityNeedsRes {

    <sessionID>
    getMobilityNeedsResultCode: <GetMobilityNeedsResultKind>
    mobilityNeeds: <MobilityNeedsType> }

The specifications of the additional message formats related to the operations S620 and S630 may be defined, for example, as follows.

GetMobilityNeedsResultKind =

    OK: EVSE supports this service and offered this to EV, and EV selected this
    OK_NotAvailable: EVSE supports this service and offered this to EV, and EV selected this, but not received yet
    Error_NotSupportedByEVSE: EVSE doesn't support this service and didn't offer this to EV
    Error_NotSelectedByEV: EVSE supported this service and offered to EV, but EV did not selected
    (TBD: In case NotAvailable, EVSE may reply immediately and CSMS request again, or CS may delay response until available )
    MobilityNeedsType {

        departureTIme = <departure_time>
        targetSOC = <target_soc>
        minimumSOC = <minimum_soc> }

    <<All optional>>
    <departure time>: in absolute time
    <target _soc> & <mininum_soc> in percentage

The formats of the messages in the operations S640 and S650 may be defined, for example, according to following specifications:

The message pattern may be request, response, and/or a message pair of a request and a response.

    SetMobilityNeedsReq {

        <sessionID>
        mobilityNeeds: <MobilityNeedsType> }

    (Upon receiving this message, CS follows ISO 15118-20 to offer new mobility needs and receives feedback from EV.)
    SetMobilityNeedsRes {

        <sessionID>
        setMobilityNeedsResultCode: <SetMobilityNeedsResultKind> }

    SetMobilityNeedsResultKind =

        OK: EVSE offered new info and EV accepted the change
        Error_Rejected: EVSE offered and EV rejected to accept the new mobility needs value

Error_Wrong value: EVSE did not offer as the requested Mobility Needs value has a problem
Error_NotActivated: Mobility needs service is not activated

The role of the CS 200 in the embodiment of FIG. 7 may be performed by the EVSE 210 or the SECC in another exemplary embodiment of the present disclosure.

The role of the CSMS 220 in the embodiment of FIG. 7 may be performed by the CSO 310 or the CPO in another exemplary embodiment of the present disclosure. The role of the CSMS 220 in the embodiment of FIG. 7 may be performed by the eMSP 360, the MO, the CSP, or the FO in yet another exemplary embodiment of the present disclosure.

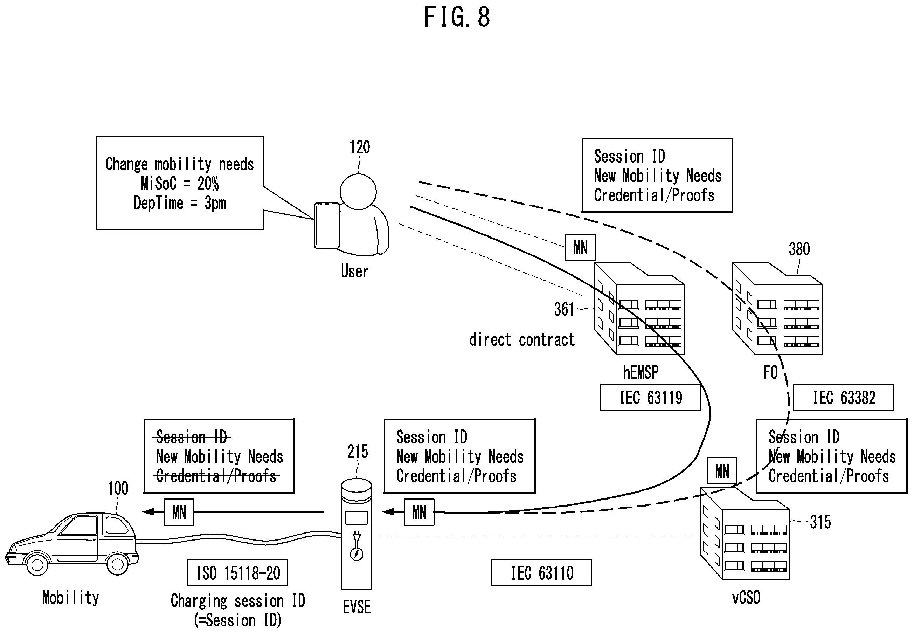

FIG. 8 is a conceptual diagram illustrating a process in which the request for configuring/applying new mobility needs information and information on authentication/authorization of the user are shared among entities in the power transfer method and/or the power transfer communication method according to an exemplary embodiment of the present disclosure.

Referring to FIG. 8, in the operations S730 and/or S640 of receiving the request for configuring/applying new mobility needs from the user 120, at least one of the session identifier (Session ID), a credential, and/or proofs may be received in addition to the new mobility needs, and information included in the request for configuring/applying new mobility needs may be forwarded to the mobility 100.

In the operations S730 and S640 of receiving the request for configuring/applying new mobility needs from the user 120, the power transfer apparatus may receive at least one of the authentication information and/or authorization information for the user 120 in addition to the new mobility needs information/configuration in case that the mobility 100 is supplied with the power from the electric vehicle supply equipment (EVSE) 215 belonging to an operating entity 315 that does not have a contractual relationship with the user 120. In such a case, in the operation of forwarding the information included in the request for configuring/applying the new mobility needs to the mobility 100, only the new mobility needs information/configuration may be forwarded excluding the authentication information and/or authorization information for the user 120.

As a method for the mobility 100 to ensure the authenticity of the mobility needs delivered from the user 120, the following options may be adopted.

Option A-1: Trusting whatever information is provided by the EVSE 210

The mobility 100 may trust entirely data transmitted by the user 120 via the EVSE 210. This option, however, may be effective under an assumption that the user 120 is validated by the authentication or the authorization through a communication between the user 120 and a secondary actor.

The data received by the mobility 100 from the EVSE 210 or the CSO 310 may be trusted only for the energy transfer. This option may be determined by the mobility 100 based on a trust assumption for the EVSE 210 or the CSO 310.

The JWGI11 message may not require a credential element.

Option A-2: Trusting whatever information is provided by the home E-mobility service provider (hEMSP)

The mobility 100 may trust entirely the data delivered by the hEMSP based on an assumption that the hEMSP has validated the authenticity of the data.

The hEMSP may add a signature to the mobility needs data.

The JWG11 message may contain credentials delivered along with the mobility needs (MN) data.

Option A-3: Validation of the authenticity of the mobility needs data by the mobility 100

The mobility 100 may ensure that the data has originated from the EV user 120, i.e., may perform an E2E authentication.

The E2E authentication process may be summarized by a following representation:

$[EV \rightarrow (cred=tok/sig) \rightarrow ]EVU \rightarrow (MN+cred) \rightarrow EMSP/FO \rightarrow CSO/EVSE \rightarrow EV]$

A credential or token may be generated by the EV user (EVU) 120 to prove the ownership of the charging session.

For example, the EV user 120 or a user equipment may already have a credential that may be verified by the mobility 100.

For example, a smart key credential (e.g., that stored in a user's phone or communication terminal) or a contract certificate and key may be used as means for this purpose.

For example, the EV user 120 may be given a credential bound to a TLS session.

For example, a TLS export-key or a TLS resumption token may be used as means for this purpose.

The trust assumption may be applied differently for each of the mobility and the EV user.

The EV user 120 may add a signature or HMAC to the mobility needs data.

The mobility needs data may be transmitted and delivered with an optional authenticity indication field such as the signature or HMAC.

For example, an optional signature or HMAC may be added to the mobility needs information according to a relevant specification such as JWS.

An actual signing mechanism determined by JWG11 may be applied.

The request for the mobility needs information with the signature may be implemented as follows.

MobilityNeedsSignedReq {

payload: Based64UrlEnc(MobilityNeedsNewReq {... })
signatures: [

{ "header": {"sub": "EMSP", "method": "EMSP SubCA2 Cert", "alg": "EC512"}
"signature": <signature> },
{ "header": {"sub": "EVU", "method": "TLS credential ", "alg": "HS512"}
"signature": <HMAC512> } ] }

A response to the request for the mobility needs information with a signature may be implemented as follows.

MobilityNeedsSignedRes {

Result = "Accepted" | "Rejected" | "FAILED_SIGNATURE_ERROR" | "FAILED_HMAC_ERROR" }

That is, besides an indication of an acceptance or rejection of the new mobility needs, an error of a signature failure or an error of a HMAC failure may be included in the result message.

Such a validation of data authenticity on the mobility 100 side may also be applicable to use cases in other standards such as those defined in WG9.

Various use cases regarding how the mobility 100 will validate the information received from the user 120 or the hEMSP may be conceived based on the embodiments described above.

For example, IEC 63110-1 standard describes use cases such as emergency cable unlocking, tariff and pricing, and so on. The verification and trust securing method on the mobility 100 side according to an exemplary embodiment may be applicable to the use cases.

The IEC 63110 standard needs to support the mobility needs service.

The CS 200 may indicate an activation or deactivation of the service.

The CSMS 220 may monitor the current mobility needs.

The CSMS 220 may provide the CS 200 with the new mobility needs information.

The CS 200 may notify the CSMS 220 whether the mobility 100 has accepted or rejected the new mobility needs.

The CSMS 220 may provide the authenticity of the data. At this time, the mobility 100 side may validate the data originated from the EMSP or the EVU.

A method that the CSO 310 or the vCSO 315 ensures the mobility needs delivered from a valid user 120 having the ownership of the charging session may be implemented using at least one of the following two options.

Option B-1: Trusting whatever information is provided by the hEMSP or the FO

The CSO 310 or the vCSO 315 may ensure or trust entirely the data transmitted by the hEMSP and/or the FO. However, the following conditions may be assumed as prerequisites:

The data is delivered from a valid user.

The user 120 has the ownership of the charging session (i.e., energy session) in question.

Option B-2: Validation of the authenticity of the mobility needs (MN) data by the CSO 310 or the vCSO 315

The CSO 310, the vCSO 315, or the EVSE 210 or 215 may validate links between the charging session and the data.

The CSO 310 may the TLS session bound to the mobility 100 with the credential and/or token.

If the mobility needs data has already been validated during a course of the charging session, no additional authentication may be required.

The validation process may be summarized by a following representation:

[EV→(cred=tok/sig)→]EVU→(MN+cred)→EMSP/FO→CSO/EVSE→EV]

The credential or token may be generated by the EV user (EVU) 120 to prove the ownership of the charging session.

For example, the EV user 120 or a user terminal may already have a credential that may be verified by the CSO 310, vCSO 315, or the EVSE 210 or 215.

For example, the smart key credential (e.g., in a user's phone or communication terminal) or the contract certificate and key may be used as means for this purpose.

For example, the EV user 120 may be given a credential bound to the TLS session.

For example, the TLS export-key or the TLS resumption token may be used as means for this purpose.

After the request for configuring/applying new mobility needs is received from the user 120 (S640), the CS 200 or the CSMS 220 may trust entirely the data related to the charging session in the request for configuring/applying new mobility needs received from the user 120 based on an assumption that the user 120 is a valid user.

The power transfer method according to an exemplary embodiment of the present disclosure may include an operation that, after the request for configuring/applying new mobility needs is received from the user 120 (S640), the CS 200 or the CSMS 220 validates a relationship between the charging session established for the mobility 100 and the request for configuring/applying new mobility needs. In such case, the validation operation may be performed by the EVSE 210 or 215, the CSO 310, or the vCSO 315, as well.

The operation S650 of receiving the response message from the mobility 100 may be performed when the mobility 100 validated that the request for configuring/applying new mobility needs is originated from the user 120 after the operation S640 of forwarding the request and/or the information included in the request for configuring/applying new mobility needs to the mobility 100.

Alternatively, based on an assumption that the mobility 100 trusts that the request for configuring/applying new mobility needs is originated from the valid user, the mobility 100 may trust entirely the data related to the charging session in the request for configuring/applying new mobility needs and transmit the response message (S650).

The role of the CS 200 in the embodiment shown in FIG. 8 may be performed by the EVSE 210 or the SECC in another embodiment of the present disclosure.

Further, the role of the CSMS 220 in the embodiment of FIG. 8 may be performed by the CSO 310 or the CPO in another embodiment of the present disclosure. The role of the CSMS 220 in the embodiment of FIG. 8 may be performed by the eMSP 360, the MO, the CSP, or the FO in another embodiment of the present disclosure.

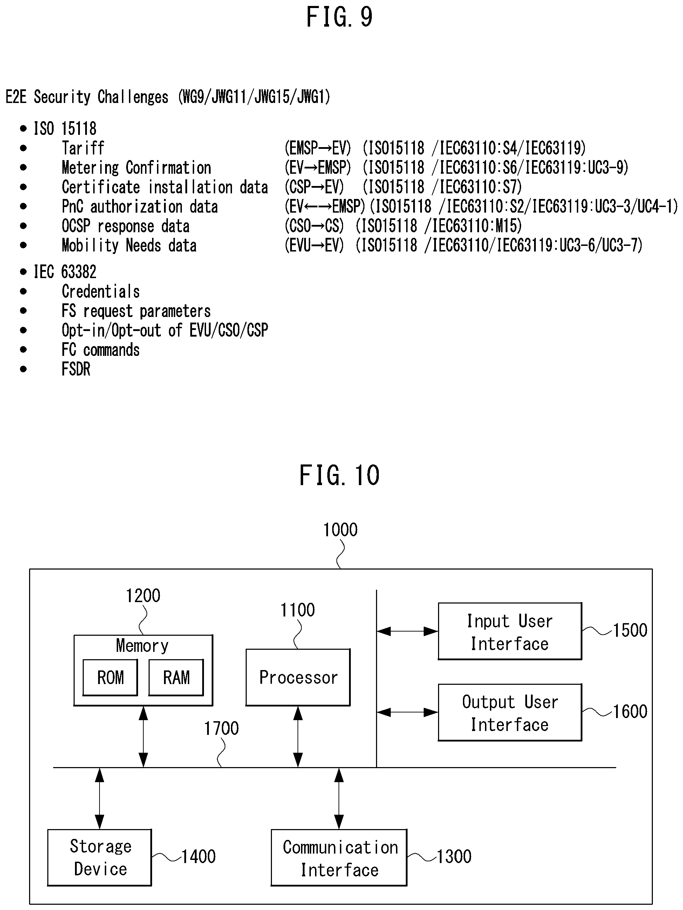

FIG. 9 illustrates an example of parameters that may be shared between the entities in the power transfer method or power transfer communication method according to an exemplary embodiment of the present disclosure.

The parameters shown in FIG. 9 are those related to E2E Security Challenges dealt with in WG9, JWG11, JWG15, and/or JWG1.

The embodiment of FIG. 9 are intended to secure confidentiality, integrity, and authenticity of the E2E verification process.

The issues considered in the embodiment of FIG. 9 may include followings:

• How to protect data transmitted from one end to another end through entities of multiple domains with various communication protocols?

• Whether all intermediate communication protocols are capable of delivering end-to-end (E2E) data

• What the trust assumptions are among the actors

• Whether intermediate actors need to process the E2E data

• Whether the data models of end or intermediate actors need to be compatible

• What the E2E data delivered through various communication protocols are

Referring to FIG. 9, ISO 15118 standard may be used to define parameters such as those related to tariff, metering confirmation, certificate installation data, PnC authorization data, OCSP response data, and the mobility needs data related to the above issues.

Meanwhile, IEC 63382 standard may be used to define parameters such as those related to credentials, FS request parameters, opt-in/opt-out of EVU/CSO/CSP, FC commands, and FSDR.

FIG. 10 is a block diagram of a detailed configuration of an internal structure of a generalized computing system suitable for implementing the power transfer apparatus, a charging(power transfer) communication apparatus in an electric mobility, any of the secondary actors, and/or a user equipment.

The power transfer apparatus may be a concept referring to the charging station (CS), the electric vehicle supply equipment (EVSE), or the supply equipment communication controller (SECC).

The charging communication apparatus in the electric mobility may be a concept referring to the electric vehicle communication controller (EVCC).

The secondary actor (SA) may be a concept referring to an eMobility service provider (eMSP), the mobility operator or marketplace operator (MO), the charging service provider (CSP), or a flexibility operator (FO).

In some embodiments of the present disclosure, the charging station operator (CSO), a charging station management system (CSMS), or the charging point operator (CPO) may be understood as the power transfer apparatus or one of the secondary actors. In other words, depending on their roles, the CSO, the CSMS, or the CPO may serve as the power transfer apparatus or may be included in the secondary actors.

Although omitted in the embodiments shown in FIGS. 1-9, a processor and a memory may be electronically connected to the components of the apparatus, and the operations of the components may be controlled or managed by the processor.

The features exemplified as a part of the power transfer method regarding the embodiments shown in FIGS. 1-9 may be implemented in the communication method for the power transfer within a scope corresponding to the object of the present disclosure.

At least some process of the power transfer method and/or the communication method for the power transfer according to an exemplary embodiment of the present disclosure may be performed by the computing system 1000 shown in FIG. 10.

Referring to FIG. 10, the computing system 1000 according to an embodiment of the present disclosure may be configured to include a processor 1100, a memory 1200, a communication interface 1300, a storage device 1400, an input interface 1500, an output interface 1600, and a bus 1700.

The computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions in the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Additionally, the computing system 1000 may include the communication interface 1300 performing communications through a wireless communication network.

Additionally, the computing system 1000 may further include the storage device 1400, the input interface 1500, and the output interface 1600.

The components of the computing system 1000 may be connected to each other by the system bus 1700 to communicate with each other.

The apparatus including the processor 1100 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

A power transfer apparatus associated with a primary assembly supplying power to an electric mobility 100 according to an exemplary embodiment of the present disclosure may include a memory 1200 storing at least one program instruction and a processor 1100 executing the at least one program instruction. The processor 1100, by executing the at least one program instruction, may receive a request, from the user 120 of the mobility 100, for providing current mobility needs related to the charging of the mobility 100, transmit current mobility needs information to the user 120, receive a request for configuring/applying new mobility needs related to the charging of the mobility 100 from the user 120, and transmit a result message informing the user 120 of whether the new mobility needs information/configuration is applied to the mobility 100.

The processor 1100 may forward the request and/or the information included in the request for configuring/applying new mobility needs to the mobility 100, and receive a response message, from the mobility 100, informing whether the new mobility needs information/configuration is applied to the mobility 100 in response to the request for configuring/applying new mobility needs.

Before receiving the request for providing current mobility needs, the user 120 may be separated from the mobility 100, the charging session for the mobility 100 may be established and the charging process for the mobility 100 may be started or may be in a standby state, and an authorization process for the user 120 may be completed.

When the processor 1100 receives the request for configuring/applying new mobility needs from the user 120, the processor 1100 may receive at least one of the session identifier, the credential, and/or the proofs in addition to the new mobility needs information/configuration. When the processor 1100 forwards the request and/or the information included in the request for configuring/applying the new mobility needs to the mobility 100, the processor 1100 may forward only the new mobility needs information/configuration excluding the session identifier, the credential, and the proofs.

When the processor 1100 receives the request for configuring/applying new mobility needs from the user 120, the processor 1100 may receive at least one of the authentication information and/or authorization information for the user 120 in addition to the new mobility needs information/configuration in case that the mobility 100 is supplied with the power from the electric vehicle supply equipment (EVSE) 215 belonging to an operating entity 315 that does not have a contractual relationship with the user 120. When the processor 1100 forwards the request and/or the information included in the request for configuring/applying the new mobility needs to the mobility 100, the processor 1100 may forward only the new mobility needs information/configuration excluding the session identifier, the credential, and/or the proofs.

When the processor 1100 receives the request for configuring/applying new mobility needs from the user 120, the processor 1100 may trust entirely all of the information included in the request for configuring/applying new mobility needs received from the user 120 based on an assumption that the user 120 is a valid user.

When the processor 1100 receives the request for configuring/applying new mobility needs from the user 120, the processor 1100 may validate a relationship between the charging session established for the mobility 100 and the request for configuring/applying new mobility needs.

The processor 1100 may receive the response message from the mobility 100 after the request and/or the information included in the request for configuring/applying new mobility needs is delivered to the mobility 100 and it is validated by the mobility 100 that the request for configuring/applying the new mobility needs is originated from the user 120.

A communication apparatus of a user 120 of an electric mobility 100 according to an exemplary embodiment of the present disclosure may include a memory 1200 storing at least one program instruction and a processor 1100 executing the at least one program instruction. The processor 1100, by executing the at least one program instruction, may transmit the request for providing current mobility needs related to the charging of the mobility 100 to a communication entity including at least one of a power transfer apparatus and/or a secondary actor involving in a process of transferring power to the mobility 100, receive current mobility needs information from the communication entity, transmit a request for configuring/applying new mobility needs related to the charging of the mobility 100 to the communication entity, and receive a result message informing whether new mobility needs information/configuration is applied to the mobility 100 from the communication entity.

Before transmitting the request for providing current mobility needs, the user 120 may be separated from the mobility 100, the charging session for the mobility 100 may be established and the charging process for the mobility 100 may be started or may be in a standby state, and an authorization process for the user 120 may be completed.

When the processor 1100 transmits the request for configuring/applying new mobility needs to the communication entity, the processor 1100 may transmit at least one of the session identifier, the credential, and/or the proofs in addition to the new mobility needs information/configuration.

When the processor 1100 transmits the request for configuring/applying new mobility needs to the communication entity, the processor 1100 may transmit at least one of the authentication information and/or authorization information for the user 120 in addition to the new mobility needs information/configuration in case that the mobility 100 is supplied with the power from the electric vehicle supply equipment (EVSE) 215 belonging to an operating entity 315 that does not have a contractual relationship with the user 120.

The apparatus and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

**Claims**

1. A power transfer method involved with a process of transferring power to an electric mobility, comprising:

   receiving a request, from a user of the electric mobility, for providing first mobility needs related to charging of the electric mobility;
   transmitting the first mobility needs information to the user;
   receiving a request, from the user, for configuring second mobility needs related to charging of the electric mobility; and
   transmitting a result message informing the user of whether the second mobility needs is applied to the electric mobility.

2. The power transfer method of claim 1, further comprising:

   forwarding the request for configuring the second mobility needs to the electric mobility; and
   receiving a response message, from the electric mobility, informing whether the second mobility needs is applied to the electric mobility in response to the request for configuring the second mobility needs.

3. The power transfer method of claim 1, wherein, before receiving the request for providing the first mobility needs, is based on a status:

   the user is separated from the electric mobility,
   a charging session for the electric mobility is established, and the charging process for the electric mobility is started or is in a standby state, and
   an authorization process for the user is completed.

4. The power transfer method of claim 2, wherein, for receiving the request for configuring the second mobility needs from the user, one or more of a session identifier, a credential, or proofs are received in addition to the second mobility needs,
   wherein, for forwarding the request for configuring the second mobility needs to the electric mobility, the second mobility needs is forwarded to the electric mobility.

5. The power transfer method of claim 2, wherein, for receiving the request for configuring the second mobility needs from the user, one or more of authentication information or authorization information for the user is received in addition to the second mobility needs in case that the electric mobility is supplied with the power from an electric vehicle supply equipment (EVSE) belonging to an operating entity having no contractual relationship with the user,
   wherein, for forwarding the request for configuring the second mobility needs to the electric mobility, the second mobility needs is forwarded to the electric mobility.

6. The power transfer method of claim 1, wherein, for receiving the request for configuring the second mobility needs from the user, the request for configuring the second mobility needs received from the user is entirely trusted based on an assumption that the user is a valid user.

7. The power transfer method of claim 1, wherein receiving the request for configuring the second mobility needs from the user comprises:
   validating a relationship between a charging session established for the electric mobility and the request for configuring the second mobility needs.

8. The power transfer method of claim 2, wherein receiving the response message from the electric mobility is performed based on a validation by the electric mobility that the request for configuring the second mobility needs is originated from the user after forwarding the request for configuring the second mobility needs to the electric mobility.

9. A power transfer apparatus associated with a primary assembly supplying power to an electric mobility, comprising:

   a memory storing at least one program instruction; and

a processor executing the at least one program instruction,
wherein the processor is configured to:

receive a request, from a user of the electric mobility, for providing first mobility needs related to charging of the electric mobility;
transmit the first mobility needs information to the user;
receive a request, from the user, for configuring second mobility needs related to charging of the electric mobility; and
transmit a result message informing the user of whether the second mobility needs is applied to the electric mobility.

10. The power transfer apparatus of claim 9, wherein the processor is further configured to:

forward the request for configuring the second mobility needs to the electric mobility; and
receive a response message, from the electric mobility, informing whether the second mobility needs is applied to the electric mobility in response to the request for configuring the second mobility needs.

11. The power transfer apparatus of claim 9, wherein, is further configured to be based on a status before the processor receives the request for providing the first mobility needs:

the user is separated from the electric mobility,
a charging session for the electric mobility is established, and the charging process for the electric mobility is started or is in a standby state, and
an authorization process for the user is completed.

12. The power transfer apparatus of claim 9, wherein, the processor is further configured to:

receive one or more of a session identifier, a credential, or proofs in addition to the second mobility needs, for receiving the request for configuring the second mobility needs from the user; and
forward the second mobility needs in addition to the request for configuring the second mobility needs to the electric mobility.

13. The power transfer apparatus of claim 9, wherein, the processor is further configured to:

receive one or more of authentication information or authorization information for the user in addition to the second mobility needs in case that the electric mobility is supplied with the power from an electric vehicle supply equipment (EVSE) belonging to an operating entity having no contractual relationship with the user; and
forward the second mobility needs in addition to the request for configuring the second mobility needs to the electric mobility.

14. The power transfer apparatus of claim 9, wherein, when the processor is further configured to receive the request for configuring the second mobility needs from the user, and trust entirely the request for configuring the second mobility needs received from the user based on an assumption that the user is a valid user.

15. The power transfer apparatus of claim 9, wherein, when the processor is further configured to validate a relationship between a charging session established for the electric mobility and the request for configuring the second mobility needs, based on the reception of the request for configuring the second mobility needs from the user.

16. The power transfer apparatus of claim 9, wherein the processor is further configured to receive a response message from the electric mobility based on a validation by the electric mobility that the request for configuring the second mobility needs is originated from the user after forwarding the request for configuring the second mobility needs to the electric mobility.

17. A communication apparatus of a user of an electric mobility, comprising:

a memory storing at least one program instruction; and
a processor executing the at least one program instruction,
wherein the processor is configured to:

transmit a request for providing first mobility needs related to charging of the electric mobility to a communication entity comprising one or more of a power transfer apparatus or a secondary actor involving in a process of transferring power to the electric mobility;

receive first mobility needs information from the communication entity;

transmit a request for configuring second mobility needs related to the charging of the electric mobility to the communication entity; and

receive a result message informing whether the second mobility needs is applied to the electric mobility from the communication entity.

18. The communication apparatus of claim 17, wherein, is further configured to be based on a status before transmitting the request for providing the first mobility needs:

the user is separated from the electric mobility,

the charging session for the electric mobility is established, and the charging process for the electric mobility is started or is in a standby state, and

an authorization process for the user is completed.

19. The communication apparatus of claim 17, wherein, when the processor is further configured to transmit one or more of a session identifier, a credential, or proofs in addition to the second mobility needs, for transmitting the request for configuring the second mobility needs to the communication entity.

20. The communication apparatus of claim 17, wherein, when the processor is further configured to transmit one or more of authentication information or authorization information for the user in addition to second mobility needs in case that the mobility is supplied with the power from the electric vehicle supply equipment (EVSE) belonging to an operating entity having no contractual relationship with the user, for transmitting the request for configuring the second mobility needs to the communication entity.

# FIG. 1

# FIG. 2

# FIG. 3

| Parameter Name | Parameter Type | Value |
|---|---|---|
| BPTControlMode | intValue | 1 (BPT control by EVSE not allowed)<br>2 (BPT control by EVSE allowed) |

| Parameter Name | Parameter Type | Value |
|---|---|---|
| MobilityNeedPriority | Enumeration | EV (Mobility Need from EV has<br>    higher priority)<br>EVSE (Mobility Need from EVSE has<br>    higher priority) |

# FIG. 4

Start BPT Charging
TargetSoC = 80%
MinSOC = 50%
DepTime = 1pm

120

User

Move

120

User

360

eMSP

• Let User know Current Mobility Needs information

HMI

HMI

IEC 63119

100

210

Current Mobility Needs
(80%, 50%, 1pm)

Current Mobility Needs
(80%, 50%, 1pm)

310

Mobility

ISO 15118-20

EVSE

IEC 63110

CSO

EP 4 621 700 A1

# FIG. 5

Change mobility needs
MiSoC = 20%
DepTime = 3pm

120

User

360

eMSP

• Let EVSE notify New Mobility Needs of the User to mobility so that mobility accept New Mobility Needs

Start BPT Charging
TargetSoC = 80%
MinSOC = 50%
DepTime = 1pm

100

New Mobility Needs
(MinSoc=20%, DTime=3pm)

200

New Mobility Needs
(MinSoc=20%, DTime=3pm)

220

Mobility

ISO 15118-20

CS

IEC 63110

CSMS

EP 4 621 700 A1

# FIG. 6

Change mobility needs
MiSoC = 20%
DepTime = 3pm

120

User

360

eMSP

- Let EVSE notify New Mobility Needs of the User to mobility so that mobility accept New Mobility Needs

Start BPT Charging
TargetSoC = 80%
MinSOC = 50%
DepTime = 1pm

100

210

New Mobility Needs
(MinSoc=20%, DTime=3pm)

New Mobility Needs
(MinSoc=20%, DTime=3pm)

310

ISO 15118-20

IEC 63110

Mobility

EVSE

CSO

# FIG. 7

EP 4 621 700 A1

# FIG. 8

Change mobility needs
MiSoC = 20%
DepTime = 3pm

120

User

Session ID
New Mobility Needs
Credential/Proofs

MN

380

361

direct contract

hEMSP

IEC 63119

FO

IEC 63382

~~Session ID~~
New Mobility Needs
~~Credential/Proofs~~

MN

215

Session ID
New Mobility Needs
Credential/Proofs

MN

Session ID
New Mobility Needs
Credential/Proofs

MN

100

315

ISO 15118-20

IEC 63110

Mobility

Charging session ID
(=Session ID)

EVSE

vCSO

EP 4 621 700 A1

# FIG. 9

E2E Security Challenges (WG9/JWG11/JWG15/JWG1)

- ISO 15118
  - Tariff                        (EMSP→EV)   (ISO15118 /IEC63110:S4/IEC63119)
  - Metering Confirmation         (EV→EMSP)   (ISO15118 /IEC63110:S6/IEC63119:UC3-9)
  - Certificate installation data (CSP→EV)    (ISO15118 /IEC63110:S7)
  - PnC authorization data        (EV←→EMSP)  (ISO15118 /IEC63110:S2/IEC63119:UC3-3/UC4-1)
  - OCSP response data            (CSO→CS)    (ISO15118 /IEC63110:M15)
  - Mobility Needs data           (EVU→EV)    (ISO15118 /IEC63110/IEC63119:UC3-6/UC3-7)
- IEC 63382
  - Credentials
  - FS request parameters
  - Opt-in/Opt-out of EVU/CSO/CSP
  - FC commands
  - FSDR

# FIG. 10

## INTERNATIONAL SEARCH REPORT

| | International application No. |
|---|---|
| | **PCT/KR2023/018347** |

| A. | CLASSIFICATION OF SUBJECT MATTER |
|---|---|

**G06Q 50/40**(2024.01)i; **B60L 55/00**(2019.01)i; **H02J 3/32**(2006.01)i; **B60L 53/66**(2019.01)i; **G06F 21/31**(2013.01)i; **G06F 21/64**(2013.01)i

According to International Patent Classification (IPC) or to both national classification and IPC

| B. | FIELDS SEARCHED |
|---|---|

Minimum documentation searched (classification system followed by classification symbols)

G06Q 50/40(2024.01); B60L 11/18(2006.01); B60L 53/66(2019.01); G06Q 50/30(2012.01); G06Q 50/30(2012.01); H02J 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 모빌리티(mobility), 충전(charge), 변경(change), 인증(certification)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2017-143634 A (TOYOTA MOTOR CORP.) 17 August 2017 (2017-08-17)<br>See paragraphs [0019] and [0021] and claim 1. | 1-20 |
| Y | KR 10-2022-0090465 A (HYUNDAI MOTOR COMPANY et al.) 29 June 2022 (2022-06-29)<br>See paragraphs [0068], [0079], [0142], [0146] and [0158] and claim 1. | 1-20 |
| Y | KR 10-2015-0066020 A (KOOKMIN UNIVERSITY INDUSTRY ACADEMY COOPERATION FOUNDATION) 16 June 2015 (2015-06-16)<br>See paragraph [0012] and claim 4. | 8,16 |
| A | KR 10-2013-0076744 A (LSIS CO., LTD.) 08 July 2013 (2013-07-08)<br>See entire document. | 1-20 |
| A | KR 10-2013-0018611 A (GENERAL ELECTRIC COMPANY) 25 February 2013 (2013-02-25)<br>See entire document. | 1-20 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 March 2024** | **05 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/018347**

| Patent document cited in search report | | | Publication date (day/month/year) | Patent family member(s) | | | Publication date (day/month/year) |
|---|---|---|---|---|---|---|---|
| JP | 2017-143634 | A | 17 August 2017 | None | | | |
| KR | 10-2022-0090465 | A | 29 June 2022 | CN | 116669985 | A | 29 August 2023 |
| | | | | EP | 4250221 | A1 | 27 September 2023 |
| | | | | WO | 2022-139485 | A1 | 30 June 2022 |
| KR | 10-2015-0066020 | A | 16 June 2015 | None | | | |
| KR | 10-2013-0076744 | A | 08 July 2013 | None | | | |
| KR | 10-2013-0018611 | A | 25 February 2013 | AU | 2012-207001 | A1 | 28 February 2013 |
| | | | | CN | 102957184 | A | 06 March 2013 |
| | | | | CN | 102957184 | B | 21 December 2016 |
| | | | | EP | 2556986 | A2 | 13 February 2013 |
| | | | | EP | 2556986 | A3 | 28 June 2017 |
| | | | | EP | 2556986 | B1 | 28 September 2022 |
| | | | | EP | 4166377 | A1 | 19 April 2023 |
| | | | | JP | 2013-048544 | A | 07 March 2013 |
| | | | | US | 2013-0038284 | A1 | 14 February 2013 |
| | | | | US | 9035607 | B2 | 19 May 2015 |

Form PCT/ISA/210 (patent family annex) (July 2022)